# EUROPEAN PATENT SPECIFICATION

(11) **EP 1 501 138 B1**
(45) Date of publication and mention of the grant of the patent: **12.05.2010**
(21) Application number: 03719224.2
(22) Date of filing: 25.04.2003
(51) Int. Cl.: H01M 4/74, H01M 4/68, C22C 11/06, C22F 1/12

(54) **PROCESS FOR PRODUCING LEAD OR LEAD ALLOY PLATE GRID FOR LEAD STORAGE BATTERY AND LEAD STORAGE BATTERY**
PROZESS ZUR HERSTELLUNG EINES BLEI- ODER BLEILEGIERUNGSPLATTENGITTERS FÜR EINE BLEIBATTERIE UND BLEIBATTERIE
PROCEDE DE PRODUCTION D'ALVEOLE DE PLAQUE EN ALLIAGE DE PLOMB OU EN PLOMB POUR DES BATTERIES D'ACCUMULATEUR AU PLOMB ET BATTERIE D'ACCUMULATEUR AU PLOMB

(30) Priority: 26.04.2002 JP 2002126942
(43) Date of publication of application: 26.01.2005
(73) Proprietor: The Furukawa Battery Co., Ltd., Yokohama-shi, Kanagawa-ken 240-0006 (JP)
(72) Inventor: OZAKI, Masanori; c/o The Furukawa Batterie Co. Ltd, Iwaki-shi, Fukushima 972- 8501 (JP)
(74) Representative: HOFFMANN EITLE
(86) International application number: PCT/JP2003/005389
(87) International publication number: WO 2003/092101

(56) References cited:
- WO-A-01/26171
- JP-A- 57 208 068
- JP-A- 2002 134 116
- JP-B2- 1 046 995
- US-B1- 6 342 110

## Description

### Technical Field

The present invention relates to a method of manufacturing a lead (or lead alloy) plate lattice for a lead-acid battery and to a lead-acid battery using the particular plate lattice, particularly, to a method of manufacturing a lead (or lead alloy) plate lattice used in a lead-acid battery for a vehicle or a secondary battery for various backup batteries and to a lead-acid battery using the particular plate lattice.

### Background Art

In the positive electrode lattice for a lead-acid battery, it is possible for the lattice to be elongated and broken because of the creep phenomenon (growth phenomenon) caused by the tensile stress applied by the corrosion product. This is particularly prominent in the grain boundary corrosion. The grain boundary corrosion gives rise to the problem that the current collecting effect and the active substance holding capability of the plate lattice are lowered. Naturally, it is necessary to suppress the grain boundary corrosion of the crystals and the entire corrosion of the positive electrode lattice. However, a required measure against the problem has not necessarily been taken sufficiently. It should also be noted that a thin plate of lead is subjected to an expanding process in the subsequent step for cutting the thin plate into the shape of a lattice. In this expanding process, the balance of the residual stress tends to be destroyed in the thin plate of lead, with the result that strains tend to be generated in the thin plate. It follows that a defect tends to be generated easily in the loading process of the active substance.

On the other hand, when it comes to the negative electrode lattice, a decrease in the thickness of the plate lattice has been reasonably achieved in an attempt to decrease the weight of the lead-acid battery. In the case of a thin plate, however, the balance of the residual stress is destroyed by the expanding process for cutting the thin plate into the shape of a lattice, with the result that strains tend to be generated in the lattice so as to cause a defect to be generated easily in the loading step. Also, since the thin plate used is poor in its flatness, an additional problem is generated that strains are generated in the entire plate lattice after the expanding process.

It was customary in the past to manufacture the plate lattice for a lead-acid battery mainly by gravity casting. In recent years, however, a manufacturing method in which a plate or a rod is expanded has come to be widely employed with progress in the continuous manufacturing process of the lead-acid battery. However, when it comes to a very thin plate, it is difficult to employ the expanding process. Such being the situation, a punch and press method has come to be put to a practical use in some cases. A continuous casting method or a continuous casting-rolling method is employed for manufacturing a thin plate that is subjected to the expanding process. In the continuous casting method, a thin plate is cast directly by bringing a melt into contact with a roll mold so as to solidify the melt.

The thin plate manufactured by the continuous casting method has a double structure in texture such that the thin plate has an ordinary cast texture on the side on which the melt is brought into contact with the roll mold and a fine texture containing poor deposition on the opposite side on which the melt is brought into contact with the air. It follows that the plate lattice manufactured by applying an expanding process to the thin plate gives rise to the problem that the lattice plate is insufficient in terms of the corrosion resistance and the fatigue strength. Also, the thin plate for the negative electrode plate is not fully satisfactory in the flatness and the uniformity of the plate thickness, with the result that the plate lattice obtained after the expanding process leaves room for further improvement in the shape of the meshes of the lattice and the strain generated in the entire lattice.

On the other hand, the continuous casting-rolling method includes a method of continuously casting a melt into a grooved casting ring, followed by continuously rolling the resultant plate by an in-line system, and a method of preparing a plate by an intermittent withdrawal casting in which a melt is solidified within a mold and the solidified shell is intermittently withdrawn from within the mold, followed by rolling the shell so as to obtain a thin plate.

In the ring casting-rolling system and the intermittent withdrawal casting-rolling system, cold working not lower than generally 90% is applied to the cast lump having a crystal grain size not smaller than 500 µm so as to allow the cold worked plate to exhibit a laminar texture or a scaly texture. The plate lattice manufactured by applying an expanding process to the plate material thus obtained was defective in that the plate lattice received corrosion on the entire surface so as to give rise to a large elongation (growth) of the plate lattice. Also, the thin plate bears a residual stress in the rolling step so as to give rise to the problem that the shape of the lattice is rendered defective or the lattice is warped in the subsequent expanding process. Further, since a rolling step is included in this system, this system produces a merit that the thin plate is rendered uniform in thickness and is caused to have a high flatness. On the other hand, since the rolling step included in this system is a cold rolling, the thin plate after the rolling step bears a residual stress so as to destroy the balance of the residual stress in the expanding process so as to give rise to a problem that the shape of the mesh of the lattice and the warping of the entire lattice are rendered poor.

As a measure for overcoming the difficulties pointed out above, proposed in PCT/CA02/00210 is a system in which the tube extrusion, the splitting, the opening process and the flattening process are carried out by using a Hanson-Robertson extruder. In this system, a lead alloy is extruded under temperatures not higher than the melting point of the lead alloy, and the extrudate is rapidly cooled with cooling water immediately after the extrusion. As a result, it is possible to improve the nonuniform crystal texture inherent in the continuous casting method described above. However, segregation is generated in the vicinity of the grain boundary so as to render the processed thin plate insufficient in corrosion resistance, with the result that a growth phenomenon is brought about in the positive electrode.

What should also be noted is that an axial deviation is generated to some extent between the die and the nipple so as to fluctuate the thickness of the pipe, with the result that the accuracy in the plate thickness is rendered poor. Also, a slit is formed at one edge portion of the pipe, followed by applying a flattening process by using, for example, a rubber roll. In this case, the processed thin plate is caused to include burrs formed at both edge portions and to be poor in flatness. The reason for the difficulty is that, since the draft rate achieved by the rubber roll is lower than 5%, it is impossible to suppress sufficiently bur generation at both edge portions and to improve sufficiently the flatness of the thin plate. In addition, since the warping in the extrusion process, the opening process and the flattening process partly remains in the processed thin plate, the balance of the residual stress is destroyed in the expanding process so as to give rise to the problem that the shape of the lattice is rendered poor and the overall warping is generated.

### Disclosure of Invention

An object of the present invention is to provide a method of manufacturing a lead (or a lead alloy) plate lattice, which permits moderating the concentration gradient (segregation in the grain boundary) and lowering the residual strain in the coagulating step by the control in the initial crystal size by extrusion under temperatures slightly lower than the melting point of lead or the lead alloy and by the control of the final crystal size by the promotion of recrystallization during the hot rolling process so as to improve the flatness of the thin plate and which also permits improving the storage properties over a long time and the stability of the mechanical strength over a long time by the improvement in the age-hardening properties so as to make it possible to manufacture a lead (or a lead alloy) plate lattice of high quality, and to provide a lead-acid battery comprising the particular lead (or lead alloy) plate lattice.

Another object of the present invention is to provide a method of manufacturing a lead (or a lead alloy) plate lattice, which permits manufacturing a plate lattice of high quality by application of an alloy having high corrosion resistance, and a lead-acid battery comprising the particular lead (or lead alloy) plate lattice.
1) In order to achieve the objects described above, the method of the present invention for manufacturing a lead (or lead alloy) plate lattice for a lead-acid battery is featured in that a melt of lead or a lead alloy is continuously extruded under temperatures lower by 10 to 100°C than the melting point of lead or the lead alloy and falling within a range of 260 to 317 °C, followed by subjecting the extrudate to cold rolling under temperatures lower by 50 to 230°C than the melting point of lead or the lead alloy with the total draft rate set at 10 to 90% and subsequently cooling and processing the cold rolled extrudate so as to manufacture a plate lattice.
2) Also, the lead-acid battery of the present invention is featured in that the lead-acid battery comprises the lead (or lead alloy) plate lattice obtained by the manufacturing method pointed out in item 1) above.
3) The method of the present invention for manufacturing a lead (or a lead alloy) plate for a lead-acid battery is featured in that, in the extruding step included in the manufacturing method pointed out above, the melt of lead or a lead alloy is extruded in the shape of a pipe, followed by forming a slit at one edge portion of the pipe and subsequently pushing the pipe from above and below the pipe in a manner to expand the pipe thereby flattening the pipe.
4) The lead-acid battery according to the present invention is featured in that the battery comprises the lead (or the lead alloy) plate lattice obtained by the manufacturing method pointed out in item 3) above.
5) The method of the present invention for manufacturing a lead (or a lead alloy) plate lattice for a lead-acid battery is featured in that, in the extruding step included in the manufacturing method pointed out above, the melt of lead or a lead alloy is extruded in the shape of a pipe bearing a slit extending in the longitudinal direction of the pipe or is extruded in a U-shape, followed by pushing the extrudate from above and below the extrudate in a manner to expand the extrudate, thereby flattening the extrudate.
6) The lead-acid battery according to the present invention is featured in that the battery comprises the lead (or the lead alloy) plate lattice obtained by the manufacturing method pointed out in item 5) above.
7) The method of the present invention for manufacturing a lead (or a lead alloy) plate lattice for a lead-acid battery is featured in that the lead alloy is a Pb-Ca-Sn-Al-Ba series alloy, and that the plate lattice is a positive electrode lattice.
8) The lead-acid battery according to the present invention is featured in that the battery comprises the lead (or the lead alloy) plate lattice (positive electrode lattice) obtained by the manufacturing method pointed out in item 7) above.
9) The method of the present invention for manufacturing a lead (or a lead alloy) plate lattice for a lead-acid battery is featured in that the lead alloy referred to in item 7) above comprises Ca in an amount not smaller than 0.02% by weight and smaller than 0.06% by weight, Sn in an amount falling within a range of between 0.4% by weight and 2.5% by weight, Al in an amount falling within a range of between 0.005% by weight and 0.04% by weight, Ba in an amount falling within a range of between 0.002% by weight and 0.014% by weight, and the balance of lead and unavoidable impurities, and that the plate lattice is a positive electrode lattice.
10) The lead-acid battery according to the present invention is featured in that the battery comprises the lead (or the lead alloy) plate lattice (lead alloy positive electrode lattice) obtained by the manufacturing method pointed out in item 9) above.

### Brief Description of Drawings

FIG. 1 shows the steps included a method of manufacturing a lead alloy material according to one embodiment of the present invention;
FIGS. 2A to 2D show the cross-sectional shapes of lead materials extruded from an extruder; and
FIG. 3 is a graph showing the age-hardening properties (relationship between the lapse of days and the change in the mechanical strength) for lead alloy materials according to one embodiment of the present invention.

### Best Mode for Carrying Out the Invention

In the present invention, lead or a lead alloy is melted, and the melt is continuously extruded under temperatures lower by 10 to 100°C than the melting point of lead or the lead alloy, i.e., extruded continuously under temperatures falling within a range of between the temperature lower by 10°C and the temperature lower by 100°C than the melting point of lead or the lead alloy and falling within a range of 260 to 317 °C.

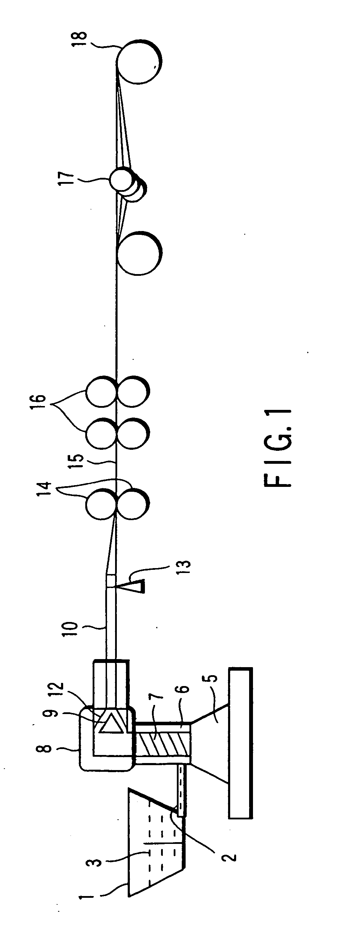

As shown in FIG. 1, a molten lead alloy is continuously extruded in the shape of a pipe and, then, the extrudate is cut open so as to form a consecutive flat plate. To be more specific, the lead alloy is melted in a melting furnace 1 so as to prepare a melt 3 of the lead alloy. In other words, the melt 3 of the lead alloy is loaded in the melting furnace 1, which is a continuous holding furnace. The melt 3 of the lead alloy is supplied from the holding furnace 2 into a cylinder 6 of a lead pipe extruder 5. A screw 7 is arranged within the cylinder 6. In accordance with rotation of the screw 7, the melt 3 is pushed upward so as to be supplied into a head 8 of the extruder 5. A nipple 9 is arranged within the head 8 together with an annular die 12.

In accordance with rotation of the screw 7 included in the extruder 5, the molten lead alloy is continuously extruded in the shape of a pipe 10 through the die 12 arranged in the upper portion of the pipe extruder 5. The extrusion is carried out under temperatures falling within a range of between the temperature lower by 10°C and the temperature lower by 100°C than the melting point of lead or the lead alloy. If the extrusion temperature is higher than the temperature lower by 10°C than the melting point of lead or the lead alloy, it is difficult to carry out the extrusion such that the extrudate retains the shape of a pipe. On the other hand, if the extrusion temperature is lower than the temperature lower by 100°C than the melting point of lead or the lead alloy, the resistance to deformation of the extruding material is increased in the extruding step so as to make it impossible to carry out the extrusion. Alternatively, the extrusion is rendered unstable.

Particularly, it is necessary for the crystal grain size after the extrusion to be not larger than 200 µm in order to obtain a final crystal grain size of 50 to 200 µm in the subsequent rolling step carried out at a prescribed temperature on the downstream side. Also, it is necessary to set the extrusion temperature to fall within the range described above in order to permit the crystal grain size after the extrusion step to be not larger than 200 µm. To be more specific, the extrusion temperature falls within a range of between 260°C and 317°C. Then, a slit is formed continuously by a cutter 13 in the extrudate in the shape of the pipe 10 so as to form a slit extending in the longitudinal direction of the extrudate. Further, the extrudate bearing the slit is pushed from above and below the extrudate by a pair of rolls 14 in a manner to expand the extrudate in the shape of the pipe 10 along the slit so as to form a plate-like body 15.

The plate-like lead or lead alloy thus prepared is rolled by pressure rolls 16. In this rolling step, recrystallization of lead or the lead alloy is promoted so as to disperse the grain boundary segregation and, thus, to improve the corrosion resistance. In order to obtain a sufficient improvement in the corrosion resistance of the rolled plate, it is necessary to carry out the rolling treatment under temperatures lower by 50°C to 230°C than the melting point of lead or the lead alloy. It is also necessary for the total draft rate to be set at 10 to 90% in the rolling step. For carrying out the rolling process satisfactorily, it is necessary for the final crystal grain size to be set at 50 to 200 µm. It is also necessary for the rolling temperature and the total draft rate to be set as described above.

If the rolling temperature is higher than the temperature lower by 50°C than the melting point of lead or the lead alloy, the crystals are allowed to grow further so as to coarsen the crystal texture, with the result that the crystal grain size exceeds 200 µm. On the other hand, if the rolling temperature is lower than the temperature lower by 230°C than the melting point of lead or the lead alloy, the recrystallization fails to proceed as desired, with the result that the grain boundary segregation cannot be dispersed and, thus, the corrosion resistance of the plate cannot be improved. It is desirable for the rolling temperature to fall within a range of between 200°C and 270°C.

It should be noted that the total draft rate noted above represents the percentage of the value obtained by dividing the difference between the thickness (t₀) of the plate before the rolling step and the thickness (t₁) after the rolling step by the thickness (t₀) before the rolling step. If the total draft rate is lower than 10%, the strain produced by the rolling fails to extend to reach an inner region of the rolled plate, and the recrystallization is achieved in the surface region alone of the rolled plate. It follows that the rolled plate bears a nonuniform texture, resulting in failure to achieve a sufficient improvement in the corrosion resistance of the rolled plate. On the other hand, if the total draft rate exceeds 90%, the resistance to creep is rendered lower than that in the case where the total draft rate is 10%. It is desirable for the total draft rate to fall within a range of between 30% and 75%. The rolling is carried out by using a plurality of pairs of pressure rolls such that the draft rate for each pass falls within a range of between 10% and 40%. After the rolling process, it is necessary to cool the rolled plate in order to maintain a desired crystal grain size. The rolled plate is then cut by a slitter 17 into cut pieces each having a prescribed width and taken up finally by a wind-up roll 18.

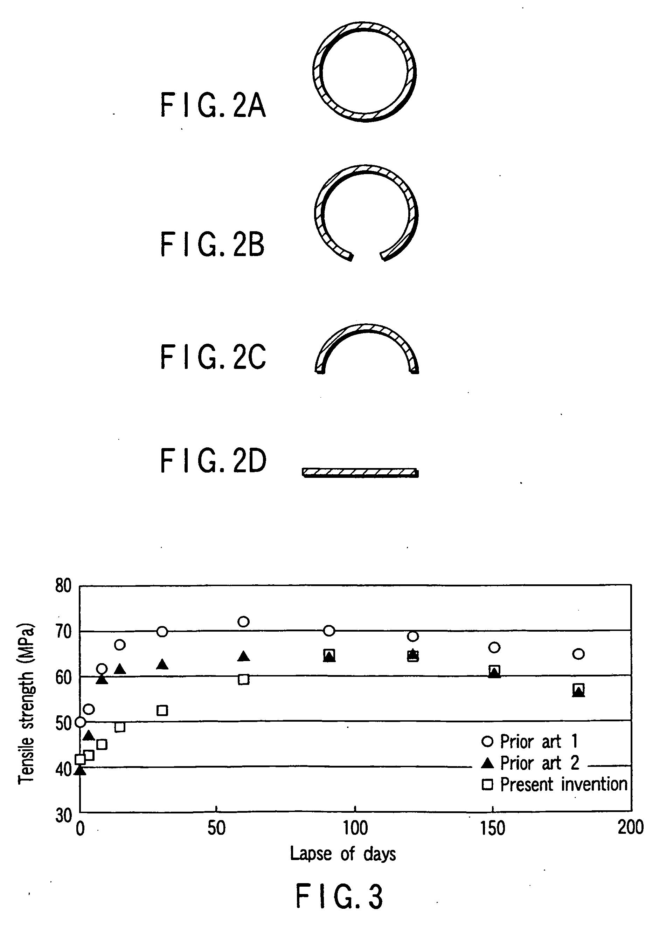

In the example described above, the molten lead or lead alloy is extruded in the shape of a pipe and, thus, the extrudate has a cross-sectional shape as shown in FIG. 2A. Alternatively, it is also possible for the molten lead or lead alloy to be extruded in the shape of a pipe including an open portion (or a slit) extending in the longitudinal direction of the pipe as shown in FIG. 2B, to be extruded in the U-shape (tub-shape) as shown in FIG. 2C, or to be extruded in the shape of a flat plate as shown in FIG. 2D.

Where the melt is extruded in the shape of a pipe or a pipe including a slit, the fluidizing range of the melt is small in the extruding step and, thus, the friction coefficient is small so as to lower the extruding pressure. Also, the pipe or the pipe including a slit is small in the nonuniformity in the thickness and is also small in the residual stress after the rolling process. As a result, the flatness is improved in the expanding process of the resultant plate. However, where the melt is extruded in the shape of a pipe, the extrudate is cut open in the subsequent process. It follows that burrs and the cutting powder are generated during the cutting process so as to make it necessary to take measures for pushing in these burrs and cutting powder in the rolling step.

Further, where the melt is extruded in the shape of a flat plate, the melt is greatly fluidized in the width direction, compared with the case where the melt is extruded in the shape of a pipe or a pipe including a slit. As a result, the friction coefficient is increased so as to increase the required extruding pressure. The nonuniformity in the thickness of the plate is also increased. It follows that the flatness in the expanding process tends to be rendered poor, compared with the case where the melt is extruded in the shape of a pipe or a pipe including a slit.

Lead or the lead alloy used in the present invention includes, for example, Pb, a Pb-Ca series alloy, a Pb-Sn series alloy and a Pb-Sb series alloy. These materials can be selected appropriately in accordance with the lattice for the positive electrode used. Also, the alloy used in the present invention for preparing the positive electrode lattice, which greatly affects the life of the battery, includes, for example, a Pb-Ca-Sn-Al-Ba series alloy excellent in corrosion resistance and in resistance to the growth phenomenon.

Calcium (Ca) contained in the alloy contributes to the improvement in the mechanical strength of the alloy. However, if the Ca content of the alloy is lower than 0.02% by weight, Ca fails to exhibit its effect sufficiently. On the other hand, if the Ca content of the alloy is not lower than 0.06% by weight, the corrosion resistance of the alloy is lowered. It follows that it is desirable for the Ca content of the alloy to be not lower than 0.02% by weight and to be lower than 0.06% by weight. It is more desirable for the Ca content of the alloy to fall within a range of between 0.03% by weight and 0.045% by weight.

Barium (Ba) contained in the alloy contributes to the improvement in the mechanical strength of the alloy. However, if the Ba content of the alloy is lower than 0.002% by weight, Ba fails to exhibit its effect sufficiently. On the other hand, if the Ba content of the alloy exceeds 0.014% by weight, the corrosion resistance of the alloy is lowered. It follows that it is desirable for the Ba content of the alloy to fall within a range of between 0.002% by weight and 0.014% by weight.

The corrosion resistance of the alloy can be improved if the alloy contains both Ca and Ba. Similarly, the interface between the plate lattice and the active substance can be densified so as to produce an additional effect that the electrical conductivity between the plate lattice and the active substance with a corroded layer interposed therebetween can be retained stable for a long time so as to further improve the life of the battery.

Tin (Sn) contained in the alloy serves to improve the flowability of the molten alloy so as to improve the quality of the cast lump, and also serves to improve the mechanical strength of the plate lattice. Further, Sn is eluted onto the lattice interface in the charge-discharge step of the battery so as to be doped in the corroded layer. As a result, a semiconductor-like effect is generated in the corroded layer so as to improve the electrical conductivity of the plate lattice and, thus, to improve the life of the battery. It is desirable for the Sn content of the alloy to be 0.4 to 2.5% by weight, more desirably, to be 0.6 to 2.5% by weight.

Aluminum (Al) contained in the alloy serves to prevent the oxidation loss of Ca and Ba in the dissolving and casting step. However, if the Al content of the alloy is lower than 0.005% by weight, Al fails to exhibit its effect sufficiently. On the other hand, if the Al content of the alloy exceeds 0.04% by weight, Al is deposited as dross so as to inhibit the flow of the melt and, thus, to lower the quality of the cast lump. It follows that it is necessary for the Al content of the alloy to fall within a range of between 0.005% by weight and 0.04% by weight.

Further, the alloy used in the present invention is prepared by adding at least one of Ag, Bi and Tl to a Pb-Ca-Sn-Al-Ba series alloy. Each of these additional elements of Ag, Bi and Tl serves to improve the mechanical strength of the alloy, particularly, the creep resistance characteristics (resistance to growth phenomenon) under high temperatures.

If the Ag content of the alloy is lower than 0.005% by weight, Ag fails to exhibit its effect sufficiently. On the other hand, if the Ag content exceeds 0.07% by weight, cracks tend to be generated easily in the cast lump in the casting step. It follows that it is desirable for the Ag content of the alloy to fall within a range of between 0.005% by weight and 0.07% by weight, particularly, between 0.01% by weight and 0.05% by weight.

If the Bi content of the alloy is lower than 0.01% by weight, Bi fails to exhibit its effect sufficiently. On the other hand, if the Bi content exceeds 0.10% by weight, the corrosion resistance of the alloy is lowered. It follows that it is desirable for the Bi content of the alloy to fall within a range of between 0.01% by weight and 0.10% by weight, particularly, between 0.03% by weight and 0.05% by weight.

The Tl content of the alloy is also important in the present invention. If the Tl content of the alloy is lower than 0.001% by weight, Tl fails to exhibit its effect sufficiently. On the other hand, if the Tl content exceeds 0.005% by weight, the corrosion resistance of the alloy is lowered. It follows that it is desirable for the Tl content of the alloy to fall within a range of between 0.001% by weight and 0.05% by weight, particularly, between 0.005% by weight and 0.05% by weight. Incidentally, Bi and Tl are cheaper than Ag and, thus, it is economical to use Bi or Tl as the additional element.

In the present invention, the grain boundary segregation is dispersed by the control of the initial crystal size to 200 µm or less, which is achieved by extrusion under temperatures slightly lower than the melting point of lead or the lead alloy, and by the promotion of recrystallization during the rolling under high temperatures. Also, the corrosion resistance is improved and the elongation rate (growth) is suppressed by controlling the final crystal size to 50 to 200 µm. It follows that the method of the present invention is adapted for the manufacture of a positive electrode lattice. Further, the residual strain can be eliminated in the present invention by the recrystallization so as to improve the flatness of the thin plate. In other words, it is possible to provide a thin plate, which has a high flatness and which permits suppressing the deformation of the meshes of the lattice and the warp of the entire lattice in the working process such as an expanding process. It follows that the present invention provides a manufacturing method adapted for the manufacture of a negative electrode lattice requiring a desired mesh shape of the lattice and a desired flatness of the lattice. Incidentally, the mesh shape of the lattice and the flatness of the lattice can be improved in the positive electrode lattice, too, and, thus, the method of the present invention is highly effective.

It should also be noted that the grain boundary segregation can be suppressed in the thin plate of lead or a lead alloy manufactured by the method of the present invention so as to moderate the age-hardening properties of the thin plate. It follows that the thin plate manufactured by the method of the present invention is adapted for the lattice forming process such as an expanding process, a punching process and a mechanical working process. Particularly, when it comes to an alloy exhibiting the age-hardening properties, the deposition of the intermetallic compound proceeds so as to make it necessary to take measures for suppressing the progress in the deposition of the intermetallic compound. Such being the situation, the supervision of the age-hardening phenomenon was strictly required in the past. However, the present invention permits eliminating such a supervision. Further, it is possible to prolong the life and the improve the quality of the positive electrode lattice by using the alloy manufactured by the method of the present invention, which exhibits a high corrosion resistance and is low in the growth phenomenon.

The present invention will now be described in detail with reference to some Examples of the present invention. Needless to say, however, the technical scope of the present invention is not limited by the following Examples.

### (Example 1)

A melt of a Pb-Ca-Sn-Al alloy for a positive electrode, which contained 0.065% by weight of Ca, 1.3 by weight of Sn, and 0.02% by weight of Al, was continuously extruded at 310°C by using an extruder as shown in FIG. 1 so as to obtain a pipe having a thickness of 2.5 mm and an outer diameter of 32 mm, the pipe being provided with a slit extending in the longitudinal direction of the pipe. The pipe thus obtained was pushed from above and below the pipe by using the pressure rolls shown in FIG. 1 so as to push open the pipe along the slit and, thus, to obtain a plate. The resultant plate was continuously rolled by a rolling machine and, then, cooled so as to obtain a thin plate having a thickness of 0.9 mm and a width of 100 mm. The rolling was performed at the total draft rate of 64%. Also, the rolling was started at 270°C and finished at 220°C.

On the other hand, a thin plate for prior art 1 was prepared by subjecting the alloy noted above to the conventional casting-rolling method under the total draft rate of 98%. Also, a thin plate for prior art 2 was prepared by the process of extruding a melt of the alloy in the shape of a pipe having a wall thickness of 0.9 mm under the extruding temperature noted above, followed by rapidly cooling the pipe, splitting the cooled pipe, and pressing the split pipe into a flat plate. The age-hardening properties (i.e., the relationship between the lapse of days and the change in the mechanical strength) were examined for each of these samples. FIG. 3 shows the results.

The sample for the present invention was recrystallized during the processing and, thus, was low in strain so as to make the deposition moderate. As a result, the rise in the age-hardening was rendered moderate, compared with the samples for prior arts 1 and 2. In general, the thin plate to which an expanding process is applied is formed of a cast and rolled material. Also, the storing period of the thin plate until application of the expanding process is about 1 to 2 weeks. In this respect, the storing period of the thin plate manufactured by the method of the present invention, to which an expanding process is applied, can be extended to 60 days. This is advantageous in the commercial manufacture of the lead-acid battery.

The flatness of the thin plate for the present invention and the flatness of each of the thin plates for the prior arts were measured. The flatness of the thin plate for the present invention was found to be 0.8 mm, the flatness of the thin plate for prior art 1 was found to be 1.5 mm, and the flatness of the thin plate for prior art 2 was found to be 3.0 mm. The expanding process was applied to each of these thin plates. The thin plate for the present invention was found to be satisfactory in the shape of the lattice and to be free from strain. On the other hand, the shape of the lattice was found to have been warped in the thin plate for each of prior arts 1 and 2. In other words, the effectiveness of the present invention was confirmed in this experiment. Incidentally, the degree of flatness is indicated by the value obtained by subtracting the thickness of the thin plate from the maximum value of the warp on a measuring plate using a flatness meter, covering a length of 1,000 mm.

Also, the molten alloy referred to above was extruded to form a pipe having a wall thickness of 2.5 mm and an outer diameter of 32 mm, the pipe including a slit extending in the longitudinal direction of the pipe, followed by applying a rolling treatment to the pipe under the total draft rate of 5 to 99.5%. The rolling treatment was started at 270°C and finished at 270 to 200°C. After the rolling treatment, the resultant thin plate was cooled with water. On the other hand, a thin plate for prior art 1 was prepared by subjecting the alloy noted above to the conventional casting-rolling method under the total draft rate of 98%. Also, a thin plate for prior art 2 was prepared by the process of extruding a melt of the alloy in the shape of a pipe having a wall thickness of 0.9 mm under the extruding temperature noted above, followed by rapidly cooling the pipe, splitting the cooled pipe, and pressing the split pipe into a flat plate.

Each of the thin plates thus prepared was subjected to a corrosion test so as to measure the weight reduction caused by the corrosion and the elongating rate (growth). Table 1 shows the results. Incidentally, the thin plate was cut into small pieces each having a width of 15 mm and a length of 70 mm for performing the corrosion test. Specifically, each of the test pieces thus prepared was continuously subjected to anodic oxidation for 30 days within sulfuric acid of 60°C having a specific gravity of 1.28 under a constant potential of 1350 mV (vs. Hg/Hg₂SO₄). Then, the formed oxide was removed so as to measure the weight reduction. On the other hand, for measuring the elongation rate (growth), the thin plate was cut into small pieces each having a width of 1.5 mm and a length of 100 mm, and each of the test pieces was subjected to the treatment as in the case of evaluating the weight reduction so as to measure the elongation. The amount of elongation was divided by the length of the test piece before the test so as to obtain the elongation rate represented by percentage.

**Table 1**

| | Total draft rate % | Crystal grain size µm | Tensile strength Mpa | Weight reduction by corrosion mg/cm² | Growth % |
|---|---|---|---|---|---|
| Example 1 | 10 | 100-150 | 43 | 50 | 1.5-2.0 |
| | 30 | 70-230 | 42 | 40 | 1.2-1.6 |
| | 75 | 60-110 | 40 | 40 | 1.1-1.5 |
| | 90 | 50-100 | 39 | 50 | 1.5-2.0 |
| Comparative example | 5 | 150-250 | 46 | 70 | 2.5 |
| | 99.5 | 30- 80 | 36 | 65 | 8 |
| Prior art 1 | 98 | Laminar texture | 48 | 160 | 3.5 |
| Prior art 2 | 0 | 150-250 | 40 | 70 | 2.5 |

Recrystallization takes place during the processing in the thin plate for the present invention so as to disperse the grain boundary segregation. As a result, the corrosion resistance of the thin plate is improved so as to decrease markedly the weight reduction caused by the corrosion, compared with the prior art, as apparent from Table 1. Table 1 also supports clearly that it is appropriate to set the draft rate at 10 to 90%, preferably at 30 to 75%. It is also seen from Table 1 that the growth phenomenon can be suppressed by controlling the crystal grain size.

### (Example 2)

The extrusion was performed as in Example 1 by using the lead alloy equal to that used in Example 1. In this case, however, the melt of the lead alloy was extruded in the form of a flat plate. To be more specific, the melt of the lead alloy was extruded to form a flat plate having a thickness of 2.5 mm and a width of 100 mm, followed by continuously applying a rolling treatment to the flat plate under the conditions similar to those for Example 1 so as to obtain a thin plate having a thickness of 0.9 mm and a width of 100 mm and subsequently cooling the rolled thin plate. The resultant thin plate was found to have a crystal grain size of 60 to 100 µm, a tensile strength of 40 MPa, a weight reduction in the corrosion test of 35 to 45 mg/cm², and an elongation (growth) of 1.1 to 1.5%. When a cross section of the thin plate was observed, the grain boundary corrosion was found to be small, and the thin plate was found to be satisfactory. Also, the degree of flatness after the rolling treatment was found to be 0.7 mm. When an expanding process was applied to the thin plate, the shape of the lattice was found to be satisfactory, and the overall warp was not observed. Further, the change with time in the tensile strength was found to be similar to that shown in FIG. 3.

### (Example 3)

The melt of the lead alloy similar to that used in Example 1 was continuously extruded at 310°C to form a pipe having a wall thickness of 1.25 mm and an outer diameter of 32 mm, and the pipe was cut open in the longitudinal direction of the pipe by a stationary cutter having a blade angle of 20° so as to obtain a pipe including a slit extending in the longitudinal direction of the pipe. Then, the pipe was pressed from above and below the pipe along the slit by using pressure rolls so as to form a flat plate. Further, the resultant flat plate was subjected to a continuous rolling treatment, followed by cooling the rolled plate so as to obtain a thin plate having a thickness of 0.9 mm and a width of 100 mm. The rolling treatment was performed with a single pass with the total draft rate set at 30%. The rolling treatment was started at 270°C and finished at 250°C. The properties of the rolled plate were measured as in Example 1. The resultant rolled plate (thin plate) was found to have a crystal grain size of 70 to 120 µm, a tensile strength of 42 MPa, a weight reduction in the corrosion test of 35 to 45 mg/cm², and an elongation (growth) of 1.2 to 1.6%. Also, the grain boundary corrosion was found to be small, and the thin plate was found to be satisfactory. Also, the degree of flatness after the rolling treatment was found to be 0.9 mm. When an expanding process was applied to the thin plate, the shape of the lattice and the flatness of the entire region of the thin plate were found to be satisfactory. Further, the change with time in the tensile strength was found to be substantially equal to that shown in FIG. 3.

### (Example 4)

Example 4 is directed to the case of using a pure lead. Specifically, molten lead was continuously extruded at 270°C so as to prepare a pipe having a wall thickness of 2.5 mm and an outer diameter of 32 mm, the pipe having a slit extending in the longitudinal direction of the pipe. The pipe thus prepared was formed into a thin plate having a thickness of 0.9 mm and a width of 100 mm as in Example 1. The rolling treatment was started at 250°C and finished at 200°C. The resultant rolled plate (thin plate) was found to have a crystal grain size of 100 to 150 µm, a tensile strength of 15 MPa, a weight reduction in the corrosion test of 30 to 40 mg/cm², and an elongation (growth) of 1.5 to 2.0%. Also, the grain boundary corrosion was found to be small, and the thin plate was found to be satisfactory. Also, the degree of flatness after the rolling treatment was found to be 0.9 mm. When an expanding process was applied to the thin plate, the shape of the lattice and the flatness of the entire region of the thin plate were found to be satisfactory.

### (Reference Example 5)

In Reference Example 5, a melt of a Pb-1.7 wt% Sb alloy was continuously extruded at 240°C so as to obtain a pipe having a wall thickness of 1.25 mm and an outer diameter of 32 mm as in Example 3, the pipe including a slit extending in the longitudinal direction of the pipe. The pipe thus obtained was formed into a thin plate having a thickness of 0.9 mm and a width of 100 mm as in Example 3. The rolling treatment was performed with a single pass with the total draft rate set at 30%. The rolling treatment was started at 250°C and finished at 200°C.

The properties of the rolled plate were measured as in Example 1. The resultant rolled plate (thin plate) was found to have a crystal grain size of 80 to 150 µm, a tensile strength of 35 MPa, a weight reduction in the corrosion test of 40 to 50 mg/cm², and an elongation (growth) of 1.2 to 1.7%. Also, the grain boundary corrosion was found to be small, and the thin plate was found to be satisfactory. Also, the degree of flatness after the rolling treatment was found to be 0.8 mm. When an expanding process was applied to the thin plate, the shape of the lattice and the flatness of the entire region of the thin plate were found to be satisfactory.

A method of manufacturing a liquid type lead-acid battery will now be described. In the first step, the plate lattice for each of Examples 1 to 5 was loaded with a positive electrode paste (active substance) by the ordinary method, and the plate lattice loaded with the positive electrode paste was retained for 24 hours under an atmosphere having a temperature of 40°C and a relative humidity of 95% for the purpose of aging, followed by drying the plate lattice so as to obtain a positive electrode green plate. In the next step, the positive electrode green plate was combined with a negative electrode green plate with a polyethylene separator interposed therebetween. The negative electrode green plate was prepared under the conditions equal to those for preparing the positive electrode green plate. Further, dilute sulfuric acid having a specific gravity of 1.200 was added so as to carry out a battery case formation, thereby manufacturing a liquid type lead-acid battery having a size D23 and a 5-hour capacity rate of 40 Ah. A life test (light load test) specified in JIS D 5301, i.e., an accelerating test, was applied to each of the lead-acid batteries thus manufactured at the testing temperature of 75°C. Table 2 shows the results.

**Table 2**

| | Alloy | The number of charge-discharge cycles (times) | Growth (%) |
|---|---|---|---|
| Example 1 | Pb-0.065wt%-1.3wt%Sn-0.02wt%Al | 3700 | 2 |
| Example 2 | Pb-0.065wt%-1.3wt%Sn-0.02wt%Al | 3750 | 1.8 |
| Example 3 | Pb-0.065wt%-1.3wt%Sn-0.02wt%Al | 3600 | 2 |
| Example 4 | Pure lead (Pb) | 3750 | 1.8 |
| Reference Example 5 | Pb-1.7wt%Sb | 2000 | 2.2 |
| Prior art 1 | Pb-0.065wt%-1.3wt%Sn-0.02wt%Al | 2100 | 4 |
| Prior art 2 | Pb-0.065wt%-1.3wt%Sn-0.02wt%Al | 2700 | 3 |

It has been confirmed that the lead-acid battery manufactured by the method of the present invention exhibits a longer life (the number of charge-discharge cycles) and, thus, is satisfactory, compared with the lead-acid battery manufactured by the conventional method.

### (Example 6)

Table 3 shows the compositions of the lead alloy samples Nos. A to J for the present invention used for preparing the positive electrode and the conventional alloy sample No. K for prior art 3. The melt of each of these alloys was continuously extruded at 300°C as in Example 1 so as to prepare a pipe having a wall thickness of 2.5 mm and an outer diameter of 32 mm, the pipe including a slit extending in the longitudinal direction of the pipe. Then, the resultant pipe was formed into a thin plate having a thickness of 0.9 mm and a width of 100 mm as in Example 1. The rolling treatment was carried out with the total draft rate set at 64%. Also, the rolling treatment was started at 270°C and finished at 220°C. Concerning the alloy sample No. G, a thin plate of the same size was prepared as in each of prior arts 1 and 2. Then, an expanding process was applied to the thin plate, and the expanded thin plate was cut into plate lattices each having a prescribed size.

The thin plate was evaluated as described previously in respect of the tensile strength, the weight reduction caused by the corrosion and the elongation rate (growth phenomenon). Also, the flatness and the shape of the lattice mesh were visually observed for each of the plate lattice so as to judge whether the plate lattice was satisfactory or defective. Table 4 shows the results.

**Table 3**

| Alloy No. | Alloy composition | | | | | | |
|---|---|---|---|---|---|---|---|
| | Ca | Sn | Al | Ba | Ag | Bi | Ti |
| A | 0.02 | 1.0 | 0.02 | 0.008 | - | - | - |
| B | 0.03 | 1.0 | 0.02 | 0.008 | - | - | - |
| C | 0.04 | 0.4 | 0.02 | 0.008 | - | - | - |
| D | 0.04 | 2.5 | 0.02 | 0.008 | - | - | - |
| E | 0.04 | 1.0 | 0.02 | 0.002 | - | - | - |
| F | 0.04 | 1.0 | 0.02 | 0.014 | - | - | - |
| G | 0.04 | 1.0 | 0.02 | 0.008 | - | - | - |
| H | 0.04 | 1.0 | 0.02 | 0.008 | 0.03 | - | - |
| I | 0.04 | 1.0 | 0.02 | 0.008 | - | 0.05 | - |
| J | 0.04 | 1.0 | 0.02 | 0.008 | 0.006 | - | 0.02 |
| K | 0.06 | 1.0 | 0.02 | - | - | - | - |

**Table 4**

| Category | Alloy No. | Tensile strength MPa | Weight reduction by corrosion mg/cm² | Growth % | Flatness | Lattice shape |
|---|---|---|---|---|---|---|
| Example 6 | A | 35 | 13.1 | 1.2 | Good | Good |
| | B | 36 | 12.8 | 1.1 | Good | Good |
| | C | 35 | 13.2 | 1.1 | Good | Good |
| | D | 40 | 14.1 | 0.9 | Good | Good |
| | E | 34 | 14.6 | 1 | Good | Good |
| | F | 39 | 14.3 | 0.8 | Good | Good |
| | G | 37 | 12.1 | 0.5 | Good | Good |
| | H | 39 | 15.2 | 0.6 | Good | Good |
| | I | 39 | 14.1 | 1 | Good | Good |
| | J | 40 | 14.5 | 1.2 | Good | Good |
| Prior art 3 | K | 32 | 50 | 3.5 | Good | Good |
| Prior art 1 | G | 42 | 25 | 2.2 | Poor | Poor |
| Prior art 2 | G | 40 | 20 | 1.9 | Poor | Poor |

As apparent from Table 4, the alloys used in Example 6 exhibited a higher resistance to corrosion and a lower growth, compared with the ordinary alloys. Also, the manufacturing method of the present invention permits improving the corrosion resistance, lowering the growth, and improving the flatness of each of the green lattice and the expanded lattice, compared with the conventional manufacturing method.

As pointed out above, the experimental data support that further improvements in the characteristics can be achieved by manufacturing the alloy exhibiting a high corrosion resistance by the manufacturing method of the present invention.

Each of the plate lattices made of the various alloys for Example 6 and the alloys for prior arts 1 and 2 was loaded with a positive electrode paste (active substance) by the ordinary method, and the plate lattice loaded with the positive electrode paste was retained for 24 hours under an atmosphere having a temperature of 40°C and a relative humidity of 95% for the purpose of aging, followed by drying the plate lattice so as to obtain a positive electrode green plate. In the next step, the positive electrode green plate was combined with a negative electrode green plate manufactured by the conventional method with a polyethylene separator interposed therebetween. Further, dilute sulfuric acid having a specific gravity of 1.200 was added so as to carry out a battery case formation, thereby manufacturing a liquid type lead-acid battery having a size D23 and a 5-hour capacity rate of 40 Ah. A life test (light load test) specified in JIS D 5301, i.e., an accelerating test, was applied to each of the lead-acid batteries thus manufactured at the testing temperature of 75°C. Table 5 shows the results.

**Table 5**

| Category | Alloy No. | The number of charge-discharge cycles (times) | Growth |
|---|---|---|---|
| Example 6 | A | 5000 | 1.8 |
| | B | 5200 | 1.7 |
| | C | 4900 | 1.4 |
| | D | 4500 | 1.5 |
| | E | 4300 | 1.2 |
| | F | 4400 | 0.8 |
| | G | 5500 | 0.9 |
| | H | 4100 | 1.5 |
| | I | 4500 | 1.8 |
| | J | 4350 | 1.5 |
| Prior art 3 | K | 3200 | 4.5 |
| Prior art 1 | G | 4200 | 2.5 |
| Prior art 2 | G | 4500 | 1.5 |

### (Example 7)

This Example is directed to the case of using a Pb-Ca-Sn-Al alloy containing 0.09% by weight of Ca, 0.50% by weight of Sn, and 0.02% by weight of Al for preparing a negative electrode. In the first step, a melt of the alloy was continuously extruded at 300°C so as to obtain a pipe having a wall thickness of 2.0 mm and an outer diameter of 32 mm, the pipe including a slit extending in the longitudinal direction of the pipe. The resultant pipe was pressed along the slit from above and below the pipe by pressure rolls so as to form a flat plate. Then, the flat plate was continuously rolled by a rolling machine, followed by cooling the rolled thin plate so as to obtain a thin plate having a thickness of 0.7 mm and a width of 78 mm. The rolling treatment was carried out with the total draft rate set at 65%, and the rolling treatment was started at 260°C and finished at 210°C. On the other hand, a melt of the alloy noted above was extruded at the extruding temperature noted above so as to obtain a pipe having a wall thickness of 0.7 mm (prior art 1). The pipe thus obtained was rapidly cooled, and a slit extending in the longitudinal direction of the pipe was formed in the pipe. Then, the pipe was expanded along the slit so as to form a flat thin plate. An expanding process was applied to the flat thin plate, and the thin plate was cut into plate lattices each having a prescribed size. Each of the plate lattices was evaluated in respect of the tensile strength, the crystal grain size, the flatness of the thin plate, and the flatness of the plate lattice. Also, the shape of the lattice mesh was visually observed for evaluation as "good", "poor" or "fair". Table 6 shows the results.

**Table 6**

| | Tensile strength MPa | Flatness | | Shape of lattice mesh |
|---|---|---|---|---|
| | | Thin plate | Plate lattice | |
| Example 7 | 42 | 0.8 mm | 2.0 mm | Good |
| Prior art 1 | 40 | 3.0 mm | 5.0 mm | Poor |

The experimental data support that, if an expanding process is applied to the thin plate for a negative electrode, which is manufactured by the method of the present invention, for preparing a plate lattice, the prepared plate lattice exhibits good flatness and a good shape of the lattice mesh.

In the present invention, a melt of lead or a lead alloy is continuously extruded, and the extrudate is rolled under a prescribed range of temperature with a prescribed total draft rate, as described above. As a result, recrystallization is brought about in the rolled plate so as to densify the crystal grain size and, thus, to prevent the grain boundary corrosion. It follows that the corrosion resistance of the rolled plate can be markedly improved. In addition, it is possible to suppress the residual stress inside the rolled plate. Such being the situation, it is possible to further improve the flatness when the rolled plate is subjected to an expanding process so as to make it possible to manufacture a lattice plate of high quality.

What should also be noted is that, according to the present invention, it is possible to improve the age-hardening properties so as to make it unnecessary or easy to store the thin plate. It follows that the supervision of the manufacture and the manufacturing cost can be lowered. Further, it is possible to markedly improve the performance of the battery by using the alloy of the present invention for the positive electrode.

## Claims

1. A method of manufacturing a lead (or lead alloy) plate lattice for a lead-acid battery, **characterized in that** a melt of lead or a lead alloy is continuously extruded under temperatures lower by 10 to 100°C than the melting point of lead or the lead alloy and falling within a range of 260 to 317 °C, followed by subjecting the extrudate to cold rolling under temperatures lower by 50 to 230 °C than the melting point of lead or the lead alloy with the total draft rate set at 10 to 90% and subsequently cooling and processing the cold rolled extrudate so as to manufacture a plate lattice.

2. A lead-acid battery, **characterized in that** the lead-acid battery comprises the lead (or lead alloy) plate lattice obtained by the manufacturing method defined in claim 1.

3. A method of manufacturing a lead (or a lead alloy) plate for a lead-acid battery according to claim 1, **characterized in that**, in the extruding step, the melt of lead or a lead alloy is extruded in the shape of a pipe, followed by forming a slit at one edge portion of the pipe and subsequently pushing the pipe from above and below the pipe in a manner to expand the pipe thereby flattening the pipe.

4. A lead-acid battery, **characterized in that** the battery comprises the lead (or the lead alloy) plate lattice obtained by the manufacturing method defined in claim 3.

5. A method of manufacturing a lead (or a lead alloy) plate lattice for a lead-acid battery according to claim 1, **characterized in that**, in the extruding step, the melt of lead or a lead alloy is extruded in the shape of a pipe bearing a slit extending in the longitudinal direction of the pipe or is extruded in a U-shape, followed by pushing the extrudate from above and below the extrudate in a manner to expand the extrudate, thereby flattening the extrudate.

6. A lead-acid battery, **characterized in that** the battery comprises the lead (or the lead alloy) plate lattice obtained by the manufacturing method defined in claim 5.

7. A method of manufacturing a lead (or a lead alloy) plate lattice for a lead-acid battery according to claim 1, **characterized in that** the lead alloy is a Pb-Ca-Sn-Al-Ba series alloy, and that the plate lattice is a positive electrode lattice.

8. A lead-acid battery, **characterized in that** the battery comprises the lead (or the lead alloy) plate lattice obtained by the manufacturing method defined in claim 7.

9. A method of manufacturing a lead (or a lead alloy) plate lattice for a lead-acid battery, **characterized in that** the lead alloy recited in claim 7 comprises Ca in an amount not smaller than 0.02% by weight and smaller than 0.06% by weight, Sn in an amount falling within a range of between 0.4% by weight and 2.5% by weight, Al in an amount falling within a range of between 0.005% by weight and 0.04% by weight, Ba in an amount falling within a range of between 0.002% by weight and 0.014% by weight, and the balance of lead and unavoidable impurities, and that the plate lattice is a positive electrode lattice.

10. A lead-acid battery, **characterized in that** the battery comprises the lead (or the lead alloy) plate lattice obtained by the manufacturing method defined in claim 9.

## Patentansprüche

1. Verfahren zur Herstellung eines Blei-(oder Bleilegierungs)-Plattengitters für eine Bleibatterie, **dadurch gekennzeichnet, dass** eine Schmelze von Blei oder einer Bleilegierung kontinuierlich unter Temperaturen extrudiert wird, die um 10 bis 100°C niedriger sind als der Schmelzpunkt von Blei oder der Bleilegierung und innerhalb eines Bereiches von 260 bis 317°C fallen, mit anschließendem Kaltwalzen des Extrudates unter Temperaturen, die um 50 bis 230°C niedriger sind als der Schmelzpunkt von Blei oder der Bleilegierung, wobei die gesamte Zugrate bei 10 bis 90% eingestellt wird, und mit anschließendem Kühlen und Verarbeiten des kaltgewalzten Extrudates unter Erzeugung eines Plattengitters.

2. Bleibatterie, **dadurch gekennzeichnet, dass** die Bleibatterie das Blei-(oder Bleilegierungs)-Plattengitter enthält, erhalten durch das Herstellungsverfahren wie in Anspruch 1 definiert.

3. Verfahren zur Herstellung einer Blei-(oder Bleilegierungs)-Platte für eine Bleibatterie nach Anspruch 1, **dadurch gekennzeichnet, dass** beim Extrusionsschritt die Schmelze von Blei oder einer Bleilegierung in der Form eines Rohrs extrudiert wird, mit anschließendem Formen eines Schlitzes an einem Kantenbereich des Rohres und anschließendes Drücken des Rohres von oben und von unten auf eine Weise, so dass das Rohr expandiert wird, wobei das Rohr abgeflacht wird.

4. Bleibatterie, **dadurch gekennzeichnet, dass** die Batterie das Blei-(oder Bleilegierungs)-Plattengitter enthält, erhalten durch das Herstellungsverfahren wie in Anspruch 3 definiert.

5. Verfahren zur Herstellung eines Blei-(oder Bleilegierungs)-Plattengitters für eine Bleibatterie nach Anspruch 1, **dadurch gekennzeichnet, dass** beim Extrusionsschritt die Schmelze von Blei oder einer Bleilegierung in der Form eines Rohres extrudiert wird, das einen Schlitz trägt, der sich in der longitudinalen Richtung des Rohres erstreckt oder in einer U-Form extrudiert wird, mit anschließendem Drücken des Extrudates von oben und von unten auf eine Weise zum Expandieren des Extrudates, wodurch das Extrudat abgeflacht wird.

6. Bleibatterie, **dadurch gekennzeichnet, dass** die Batterie das Blei-(oder Bleilegierungs)-Plattengitter enthält, erhalten durch das Herstellungsverfahren wie in Anspruch 5 definiert.

7. Verfahren zur Herstellung eines Blei-(oder Bleilegierungs)-Plattengitters für eine Bleibatterie nach Anspruch 1, **dadurch gekennzeichnet, dass** die Bleilegierung eine Legierung der Pb-Ca-Sn-Al-Ba-Serie ist und dass das Plattengitter ein positives Elektrodengitter ist.

8. Bleibatterie, **dadurch gekennzeichnet, dass** die Batterie das Blei-(oder Bleilegierungs)-Plattengitter umfasst, erhalten durch das Herstellungsverfahren wie in Anspruch 7 definiert.

9. Verfahren zur Herstellung eines Blei-(oder Bleilegierungs)-Plattengitters für eine Bleibatterie, **dadurch gekennzeichnet, dass** die Bleilegierung gemäß Anspruch 7 Ca in einer Menge von nicht weniger als 0,02 Gew.-% und weniger als 0,06 Gew.-%, Sn in einer Menge innerhalb eines Bereiches zwischen 0,4 und 2,5 Gew.-%, Al in einer Menge innerhalb eines Bereiches zwischen 0,005 und 0,04 Gew.-%, Ba in einer Menge innerhalb eines Bereiches zwischen 0,002 und 0,014 Gew.-% enthält, wobei der Rest Blei und nichtvermeidbare Verunreinigungen sind, und dass das Plattengitter ein positives Elektrodengitter ist.

10. Bleilegierung, **dadurch gekennzeichnet, dass** die Batterie das Blei-(oder Bleilegierungsplattengitter enthält, erhalten durch das Herstellungsverfahren wie in Anspruch 9 definiert.

## Revendications

1. Procédé de fabrication d'une plaque en treillis en plomb (ou en alliage de plomb) pour un accumulateur au plomb acide, **caractérisé en ce qu'**une masse fondue de plomb ou d'alliage de plomb est extrudé en continu à des températures inférieures de 10 à 100°C au point de fusion du plomb ou de l'alliage de plomb et comprises dans une gamme entre 260 et 317°C, soumettre ensuite l'exdrudat à un laminage à froid à des températures inférieures de 50 à 230°C au point de fusion du plomb ou de l'alliage de plomb avec un taux d'étirage total entre 10 et 90% et soumettre par la suite l'extrudat laminé à froid à un refroidissement et un traitement de manière à fabriquer une plaque en treillis.

2. Accumulateur au plomb acide, **caractérisé en ce que** l'accumulateur au plomb acide comprend la plaque en treillis en plomb (ou en alliage de plomb) obtenu par le procédé de fabrication défini dans la revendication 1.

3. Procédé de fabrication d'une plaque en plomb (ou en alliage de plomb) pour un accumulateur au plomb acide selon la revendication 1, **caractérisé en ce que** l'étape d'extrusion, la masse fondue de plomb ou d'alliage de plomb est extrudée sous la forme d'un conduit, suivi par la formation de fentes sur une partie de bord du conduit et par la suite pousser le conduit par le dessus et le dessous du conduit de façon à étendre le conduit conduisant à aplatir le conduit.

4. Accumulateur au plomb acide, **caractérisé en ce que** l'accumulateur comprend une plaque en treillis en plomb (ou en alliage de plomb) obtenue par le procédé de fabrication selon la revendication 3.

5. Procédé de fabrication d'une plaque en treillis en plomb (ou en alliage de plomb) pour un accumulateur au plomb acide selon la revendication 1, **caractérisé en ce que** dans l'étape d'extrusion, la masse fondue de plomb ou d'alliage de plomb est extrudée sous la forme d'un conduit portant une fente s'étendant dans la direction longitudinal du conduit ou est extrudé en U, l'extrudat étant ensuite pousser par le haut et le dessous de l'extrudat de manière à étendre l'extrudat, conduisant à aplatir l'extrudat.

6. Accumulateur au plomb acide, **caractérisé en ce que** l'accumulateur comprend une plaque en treillis en plomb (ou en alliage de plomb) obtenue par le procédé de fabrication selon la revendication 5.

7. Procédé de fabrication d'une plaque en treillis en plomb (ou en alliage de plomb) pour un accumulateur au plomb acide selon la revendication 1, **caractérisé en ce que** l'alliage de plomb est un alliage série Pb-Ca-Sn-Al-Ba, et **en ce que** la plaque en treillis est une électrode en treillis positive.

8. Accumulateur au plomb acide, **caractérisé en ce que** l'accumulateur comprend une plaque en treillis en plomb (ou en alliage de plomb) obtenue par le procédé de fabrication selon la revendication 7.

9. Procédé de fabrication d'une plaque en treillis en plomb (ou en alliage de plomb) pour un accumulateur au plomb acide, **caractérisé en ce que** l'alliage de plomb de la revendication 7 comprenant du Ca dans une quantité au moins égale à 0,02% en poids et inférieure à 0,06% en poids, Sn dans une quantité comprise entre 0,4% en poids et 2,5% en poids, Al dans une quantité comprise entre 0,005% en poids et 0,04% en poids, Ba dans une quantité comprise entre 0,002% en poids et 0,014% en poids, et le reste étant du plomb et les inévitables impuretés, et **en ce que** la plaque en treillis est une électrode en treillis positive.

10. Accumulateur au plomb acide, **caractérisé en ce que** l'accumulateur comprend une plaque en treillis en plomb (ou en alliage de plomb) obtenue par le procédé de fabrication selon la revendication 9.
